# FASCICULE DE BREVET EUROPEEN

(11) **EP 1 847 798 B1**
(45) Date de publication et mention de la délivrance du brevet: **07.10.2009**
(21) Numéro de dépôt: 06112762.7
(22) Date de dépôt: 19.04.2006
(51) Int. Cl.: G01B 5/02, G01B 5/06

(54) **Instrument de mesure de dimensions et colonne de mesure verticale comprenant un tel instrument**
Vorrichtung zur Messung von Dimensionen und vertikale Säule mit einer solchen Vorrichtung
Dimension measuring instrument and vertical measurement column including said instrument

(43) Date de publication de la demande: 24.10.2007
(73) Titulaire: TESA SA, 1020 Renens (CH)
(72) Inventeur: Zanier, Adriano, 1008, Prilly (CH)
(74) Mandataire: P&TS Patents & Technology Surveys SA

(56) Documents cités:
- EP-A- 1 089 051
- US-A- 4 924 598
- US-A- 5 040 308

## Description

### Domaine technique

La présente invention concerne un instrument de mesure de dimension, en particulier de dimensions linéaires, et plus en particulier, mais pas exclusivement, une colonne de mesure de dimensions comportant un tel instrument.

### Etat de la technique

Les instruments de mesure tels que les colonnes de mesure verticales et les machines de mesure de cordonnées sont utilisés pour la mesure et le contrôle dimensionnel de pièces mécaniques de haute précision. Ils livrent des mesures dont l'exactitude est souvent de l'ordre de quelques micromètres.

Ces instruments sont généralement associés à une table plane horizontale ou à un banc de mesure sur lequel la pièce à mesurer ou à contrôler est posée dans une position choisie de telle sorte que ce banc constitue un plan de référence.

Selon le type d'appareil, celui-ci comporte soit trois guides orientées parallèlement à trois axes de coordonnées rectangulaires dont deux sont inscrits dans le plan du banc de mesure, comme sur les appareils de mesures tridimensionnelles, ou bien une seule guide orientée perpendiculairement au plan du banc de mesure, comme dans le cas des colonnes de mesure verticales.

Sur les colonnes de mesure, le guide est fixé verticalement sur une base rigide comportant une semelle d'appui déplaçable par glissement, ou sur un coussin d'air, sur le banc de mesure, de manière à pouvoir accéder à tous les cotés de la pièce à mesurer.

Les instruments de mesure disposent généralement aussi, sur chaque axe de mesure, d'un encodeur de position optoélectronique de haute précision, ainsi que d'un dispositif électronique de contrôle et affichage, éventuellement contenu dans un pupitre visible par l'opérateur, pour l'affichage des dimensions relevées selon un ou plusieurs modes de mesure.

Le brevet européen EP0579961 au nom de la demanderesse décrit une colonne de mesure verticale avec un chariot de mesure, coulissant sur un guide vertical. Le chariot de mesure comporte un chariot d'entraînement, coulissant relativement au chariot de mesure, qui transmet la force verticale agissant sur le chariot de mesure. Dans cet instrument la liaison entre le chariot de mesure et le chariot d'entraînement est élastique : Un système de ressorts reliant les deux chariots reprend, et en même temps permet de mesurer, la force agissant sur le chariot de mesure.

Pour certaines opérations de mesure ou de traçage, cependant, cette élasticité n'est pas désirable. Un accouplement mécanique, engageable par l'opérateur en agissant sur un organe de commande du chariot, permet alors le blocage relatif du chariot de mesure et du chariot d'entraînement.

Les documents CH667726 et EP0223736 décrivent aussi des instruments de mesure ayant des caractéristiques similaires.

La demande de brevet EP1089051 publié le 4 avril 2001 décrit une colonne de mesure comportant un boîtier, avec deux chariots reliés par un ressort et une modalité de mesure à force d'appui constant. Ce document décrit un dispositif de blocage pour solidariser les chariots, par exemple lors d'une opération de traçage par une tige de blocage horizontale, solidaire du premier chariot, dont une extrémité peut s'engager dans un trou du premier chariot et l'autre, accessible depuis l'extérieur, consent l'actionnement de la part d'un opérateur.

Le brevet US4924598 publié le 15 mai 1990 concerne une colonne de mesure motorisée avec un dispositif de mesure à force constante.

Le brevet US5040308 publié le 20 août 1991 concerne un autre exemple de colonne à double chariot, dans laquelle le chariot flottant peut être bloqué ou débloqué en actionnant un levier disposé sur le chariot fixe

Ces dispositions présentent toutefois l'inconvénient que les dispositifs de blocage décrit ci-dessus nécessitent, pour leur actionnement, l'accès de l'opérateur au chariot de mesure. Lorsque ce dernier est entouré d'une carrosserie ou boîtier de protection, cet accès n'est pas facile et nécessite le ménagement d'ouvertures supplémentaires dans la carrosserie.

D'autre part, on connaît des colonnes et instruments de mesure de dimension dépourvus d'enveloppe de protection. Dans ces instruments le guide, qui définit l'axe de mesure, ainsi que l'encodeur qui génère le signal électrique de mesure, sont ouverts et facilement accessibles depuis l'extérieur.

L'inconvénient de cette disposition est qu'elle n'offre aucune protection contre les agents externes. Lorsque ces instruments sont utilisés en milieu pollué ou à forte teneur en humidité, ce qui est souvent le cas dans les ateliers d'usinage, les poussières et les gouttelettes d'huile et d'eau présents dans l'atmosphère se déposent progressivement sur les surfaces de référence et sur les règles graduées des encodeurs, dégradant ainsi la précision de l'instrument. Le boîtier de protection a aussi la tâche de protéger les guides et les mécanismes à son intérieur des chocs accidentels, qui pourraient provoquer des déformations ou des déréglages néfastes pour la précision de la mesure.

### Bref résumé de l'invention

Un but de la présente invention est de proposer un instrument de mesure de dimensionsexempt des limitations des instruments connus.

Un autre but de l'invention est de proposer un instrument de mesure de dimension dans lequel le blocage du chariot de mesure peut être effectué plus rapidement et facilement que dans les instruments de l'art antérieur.

Un autre but de l'invention est de proposer un instrument de mesure de dimensions dans lequel le mécanisme de blocage du chariot de mesure peut être actionné sans exposer l'instrument à la pollution de l'atmosphère.

Ces buts sont atteints par l'objet de la revendication indépendante, les revendications dépendantes illustrant des modes préférentiels de réalisation de l'invention. Ces buts sont atteints notamment par un instrument de mesure de dimensions comprenant :
un chariot mobile pouvant se déplacer parallèlement à un guide, le guide définissant un axe de mesure ;
un dispositif d'entraînement relié au chariot mobile par une transmission comprenant un élément élastique de transmission, de manière à déterminer le déplacement linéaire du chariot mobile ;
un palpeur relié au chariot mobile et destiné à être mis en contact avec une pièce à mesurer ;
des moyens d'accouplement actionnables par l'opérateur, pouvant assumer un état déverrouillé, dans lequel les forces agissant sur le chariot mobile sont transmises par l'élément élastique de transmission, lequel est libre de se déformer sous l'action de ces forces, et un état verrouillé, dans lequel les forces agissant sur le chariot mobile sont transmises par les éléments d'accouplement, sans influencer l'élément élastique de transmission ;
l'instrument de mesure comprenant un boîtier de protection entourant un volume protégé dans lequel se trouvent le chariot mobile et le guide, caractérisé en ce que l'état des moyens d'accouplement peut être modifié en appliquant au chariot mobile une force supérieure à un seuil prédéterminé.

Les modes particuliers de réalisation de l'invention sont définis dans les revendications dépendantes 2 à 23.

### Brève description des dessins

Des exemples de mise en oeuvre de l'invention sont indiqués dans la description illustrée par les figures annexées dans lesquelles :
La figure 1 illustre un instrument de mesure à un seul axe vertical selon l'invention.
La figure 2 montre l'instrument de la figure 1 sansson boîtier de protection.
La figure 3 montre en détail le chariot de mesure et le chariot de transport y relié d'un instrument de mesure selon l'invention.
Les figures4, 5 et 8 illustrent les chariots de mesure et transport de la figure 3, selon des vues différentes.
Les figures6 et 7 montrent les chariots de mesure et de transport selon l'invention dans une configuration libre, respectivement bloquée.
La figure 9 illustre une coupe de l'instrument de mesure de la figure 1 dansson boîtier.
Les figures 10 et 11 montrent deux variantes des moyens d'accouplement de l'invention.

### Exemple(s) de mode de réalisation de l'invention

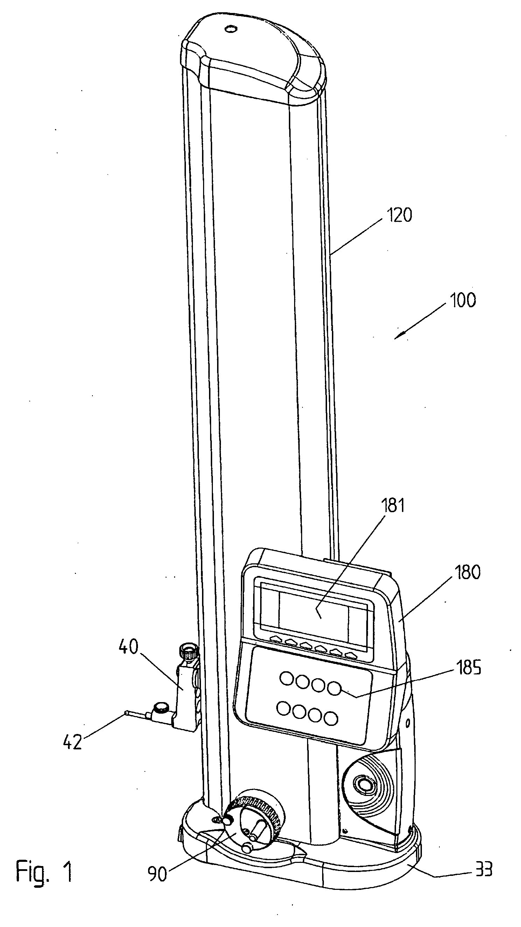

La figure 1, montre un instrument de mesure vertical 100 comporte un socle 33, destiné à être posé sur une surface de référence non représentée, laquelle porte aussi la pièce à mesurer, et un palpeur 40, muni dans l'exemple d'une sphère de contact 42, capable de se mouvoir selon un axe de mesure vertical sous l'action de la manivelle 90. Selon le travail à effectuer, le palpeur 40 pourrait aussi être équipé d'autres accessoires, par exemple des tiges de liaison courbées, pour mesurer des surfaces difficilement accessibles, un comparateur, pour effectuer des mesures de profil et de perpendicularité, ou encore d'un trusquin pour tracer des ligner horizontales.

Le pupitre de commande 180 comprend, à l'intérieur d'un boîtier étanche aux pollutions, par exemple les projections d'huile et d'eau, ainsi que l'humidité, un dispositif électronique de contrôle, non visible, pour calculer les données relatives à la mesure en cours et les présenter sur l'affichage 181. Le pupitre de commande porte également des touches d'introduction de données 185, permettant à l'opérateur de fournir au contrôleur des données tels que des données de calibration, des commandes de sauvegarde ou impression de données, ou des commandes de changement de mode de mesure. Dansune variante de l'invention, l'introduction de commandes de changement de mode de mesure est aussi possible par des manipulations de la manivelle de déplacement 90.

Le boîtier du pupitre 180 préserve les dispositifs électroniques contenus des projections d'huile et eau, aussi bien que des particules de poussière, toujours abondantes dans les ateliers mécaniques. Les composants mécaniques de l'instrument de mesure 100 sont, quant à eux, protégés par le boîtier 120.

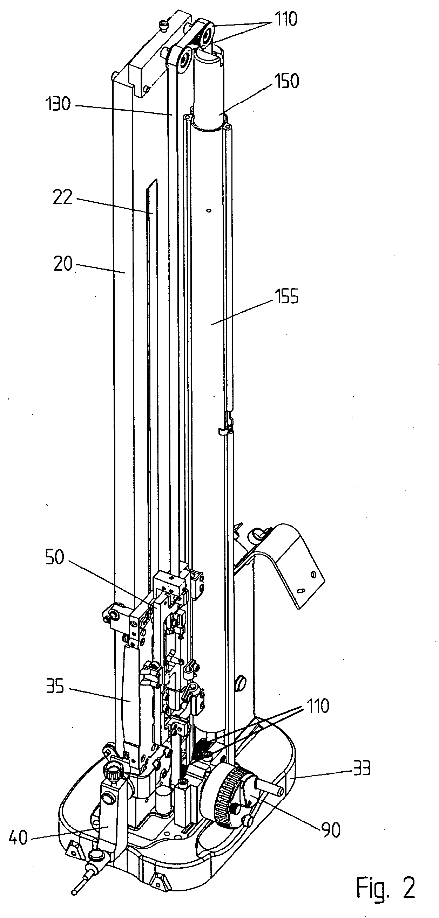

La figure 2 montre une colonne de mesure dépourvue du boîtier de protection 120 et du pupitre 180, permettant ainsi la vision des composants mécaniques de l'instrument.

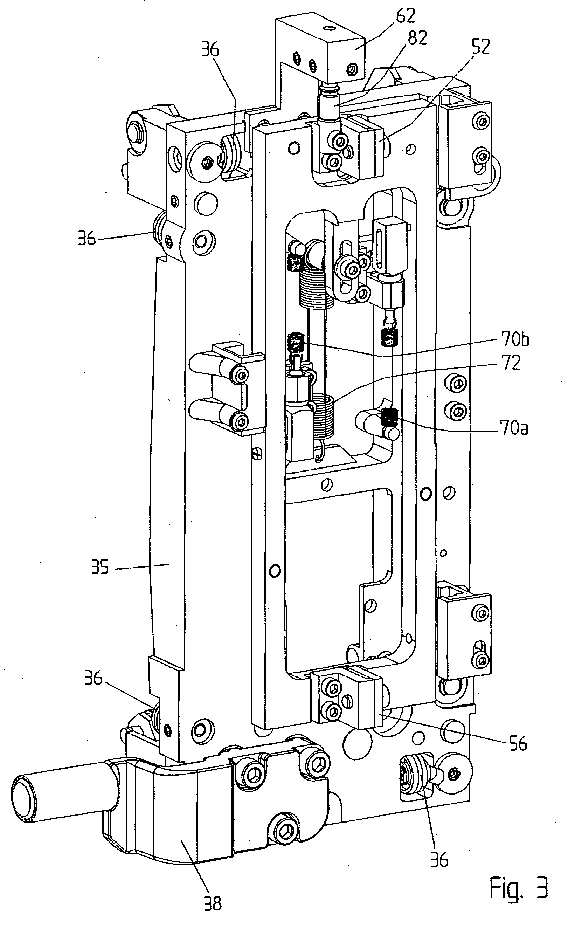

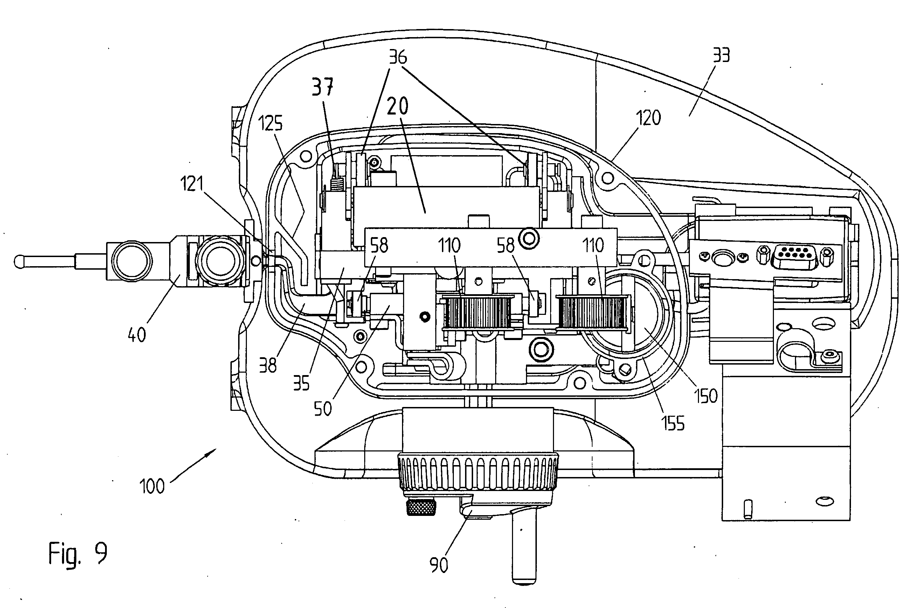

Un guide 20, avec des surfaces rectilignes et verticales exactement rectifiées, définit l'axe de mesure de l'instrument. Le chariot de mesure 35, qui porte le palpeur 40, se déplace sansjeu sur le guide 20 à l'aide d'un système de galets 36, mieux visibles sur les figures3 et suivantes. La reprise automatique du jeu est obtenue par des ressorts 37 dont un est visible sur la figure 9.

Cette disposition assure que la course du chariot de mesure 35 et, par conséquent, du palpeur 40, est rigoureusement rectiligne et parallèle à l'axe de mesure. L'homme du métier pourrait réaliser la même caractéristique, tout en restant dans le domaine de l'invention, par d'autres dispositions, par exemple par un curseur, portant la touche de mesure, glissant le long d'une coulisse définissant un axe rectiligne, ou par tout autre moyen de guidage approprié.

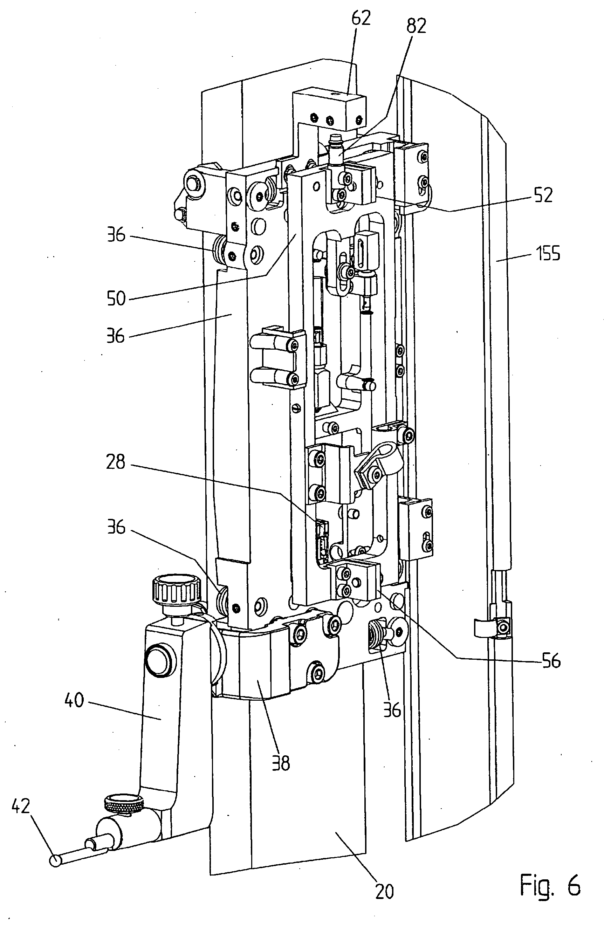

Revenant maintenant à la figure 2, le guide vertical 20 porte, sur une surface juxtaposée au chariot 35, la règle en verre 22 d'un encodeur optique de position, portant une succession régulière de graduations réfléchissantes. Un capteur optoélectronique 28 (fig. 6) connecté au contrôleur permet, de manière connue, de déterminer la position du chariot 35 relativement à la règle 22.

En alternative, l'encodeur optique constitué par la règle 22 et le capteur optoélectronique 28 pourrait être remplacé, tout en restant dans le domaine de l'invention, avec un dispositif de détermination de position de nature différente, par exemple :
- un encodeur optique interférentiel ;
- un encodeur de type magnétorésistif, comprenant une règle magnétisée, solidaire du guide 20 et comportant un réseau de régions magnétisées selon deux directions alternées, et un capteur magnétorésistif solidaire du chariot 35 ;
- un encodeur capacitif, dans lequel le capteur solidaire du chariot 35 est sensible aux variationsde capacité induite par un réseau d'électrodes conductifs sur une règle solidaire du guide 20 ;
- un encodeur inductif, composé d'un capteur solidaire du chariot 35 avec des bobines de transmission et captage d'un signal alterné, et un réseau d'électrodes conductifs solidaires du guide 20, les électrodes induisant des déphasages dépendants de la position dans le signal reçu par les bobines de captage ;
- un dispositif de lecture directe de la position, par exemple un cadran indicateur, ou une échelle graduée ;
- tout autre dispositif de détermination de position connu.

Le mouvement vertical du chariot 35 est produit par la courroie 130, ou un autre organe d'entraînement flexible, tel qu'un câble ou une chaîne, formant une boucle fermée autour des poulies 110, actionnée par l'opérateur à l'aide de la manivelle 90. La courroie entraîne le chariot mobile par l'intermédiaire du chariot d'entraînement 50, dont la fonction sera décrite en détail par la suite. Un contrepoids 150, guidé par le tube 155, équilibre le poidsdu chariot de mesure 35, du palpeur 40 et du chariot d'entraînement 50.

Selon une variante d'exécution non représentée, chaque paire de poulies 110 est remplacée par une simple poulie de diamètre plus important. Selon une autre variante non représentée de l'invention, la courroie 130 est entraînée par un moteur électrique, actionnable par l'opérateur par des moyens de commande appropriés, par exemple une manivelle, ou par le contrôleur de l'instrument, selon un programme de déplacement adapté à la mesure en cours. Optionnellement, selon cette variante, le moteur électrique, placé dans la partie haute de la colonne, entraîne une poulie supérieure. Le brin inférieur de courroie, ainsi que les poulies inférieures sont alors superflus. Certaines caractéristiques de cette variante motorisée de l'invention sont décrites dans la demande de Brevet Européen EP1319924 au nome de la demanderesse, qui est ici incorporée par référence.

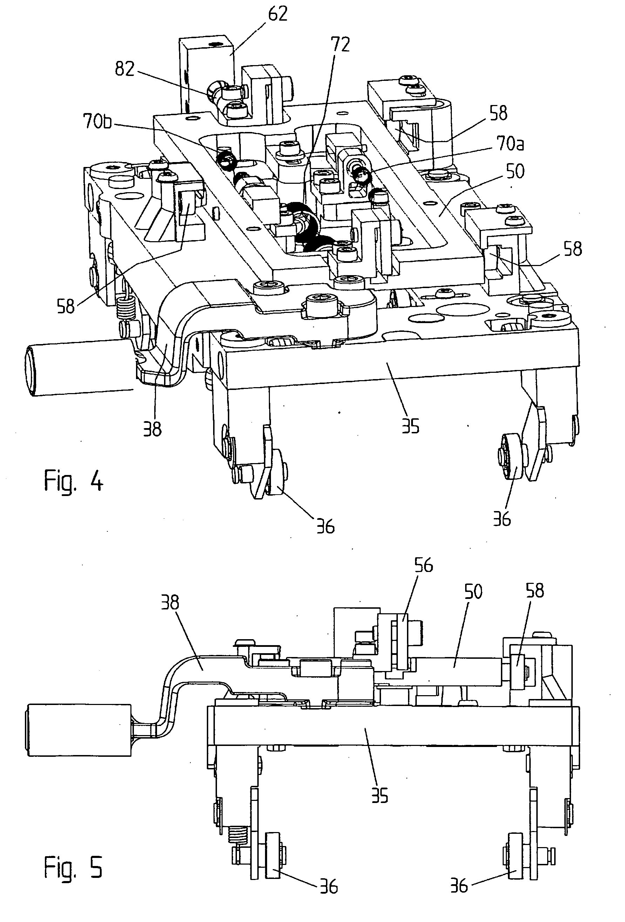

Le chariot de mesure 35 selon cette variante d'exécution de l'invention sera maintenant décrit à l'aide des figures 3, 4, 5 et 8, qui le montrent selon différentes perspectives. Le chariot de mesure 35 roule le long du guide 20 grâce aux galets 36 et supporte, par l'intermédiaire du bras coudé 38, le palpeur 40, non représenté sur ces figures. Le chariot d'entraînement 50 est libre de se déplacer par rapport au chariot de mesure 35 selon une direction parallèle à l'axe de mesure et à la direction de roulement de ce dernier le long du guide 20. Ce mouvement du chariot d'entraînement 50 relativement au chariot de mesure 35 est possible grâce aux galets 58, qui guident le chariot d'entraînement 50 dans la direction de l'axe de mesure, ainsi qu'à un ressort à lame, non visible, qui pousse le chariot d'entraînement 50 contre le chariot de mesure 35.

Selon la direction de l'axe de mesure, le chariot de mesure 35 et le chariot d'entraînement 50 sont reliés par un élément de transmission élastique comprenant les ressorts 70a, 70b et 72. Le ressort 72 est dimensionné, selon cette variante, pour compenser le poids du chariot de mesure et du palpeur 40. Lesdeux ressorts symétriques70a et 70b génèrent des forces de rappel tendant à ramener le chariot de mesure 35 versune position centrale d'équilibre, relativement au chariot d'entraînement 50, lorsqu'il s'écarte de cette position d'équilibre par l'action de forces externes, par exemple d'une force exercée par la pièce à mesurer sur le palpeur 40.

Il serait aussi possible de simplifier cette disposition en adoptant deux ressorts ou un seul ressort en lieu des trois ressorts 70a, 70b et 72. Les ressorts pourraient aussi être remplacés, tout en restant dans le cadre de la présente invention, par un ou plusieurs éléments élastiques quelconques, par exemple des éléments élastomères, ou des dispositifs pneumatiques.

La figure 6 représente le chariot de mesure selon cette variante de l'invention dans son état libre. Le chariot de mesure 35 est suspendu par l'élément de transmission élastique comprenant les ressorts 70a, 70b et 72 (voir figure 3) au chariot d'entraînement 50, lequel est maintenu par la courroie (non visible sur cette figure) fixée aux attaches 52 et 65. En l'absence de forces externes agissant sur le chariot de mesure celui-ci est dans la position d'équilibre déterminée par son propre poids et par la force de rappel des ressorts 70a, 70b et 72.

Lorsque le chariot de mesure 35 est soumis à une force verticale (par exemple suite à un contact du palpeur 40 avec la pièce à mesurer), celle-ci est transmise au corpsde l'instrument de mesure par l'élément de transmission élastique, qui se déforme en conséquence, déplaçant ainsi le chariot de mesure 35 relativement au chariot de transport 50 jusqu'à une nouvelle position d'équilibre.

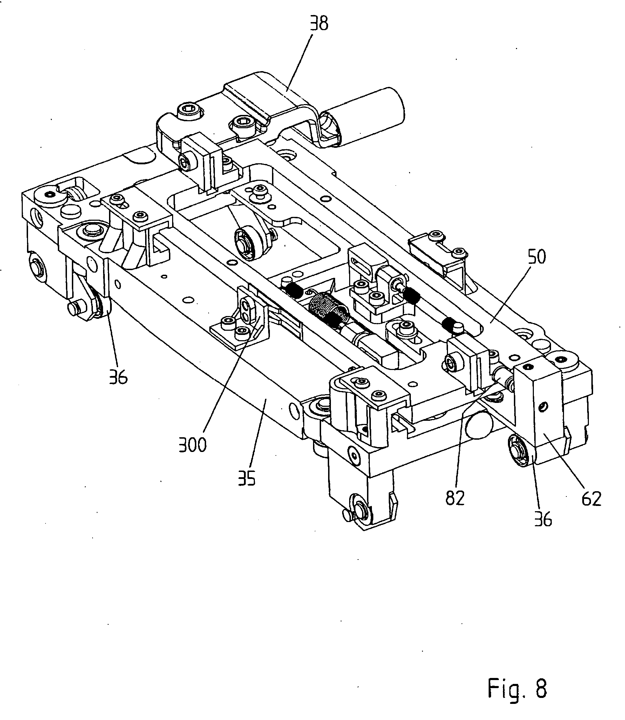

De cette manière, la force de mesure, soit la force de contact entre le palpeur 40 et la pièce à mesurer, peut être contrôlée en mesurant la dimension linéaire de l'élément élastique de transmission, par exemple par le potentiomètre 300, visible sur la figure 8, ou par tout autre capteur de position. La valeur instantanée de la force de contact est présentée sur l'affichage 181. L'opérateur peut ainsi vérifier à tout instant que la force de mesure reste dans les limites admissibles.

Dans l'état libre représenté sur la figure 6, l'élasticité de l'élément des ressorts 70a, 70b et 72 permet aussi d'absorber les petits déplacements du palpeur et de maintenir ainsi la force de mesure dans les limites admissibles lorsqu'on mesure des surfaces courbes, par exemple lors des mesures d'alésage ou de diamètre.

D'autres modalités de mesure, en revanche, sont plus aisées lorsque la connexion entre le chariot de mesure et l'instrument est rigide plutôt qu'élastique. Tel est le cas, par exemple, des mesures de profil, effectuées avec un comparateur fixé au palpeur 40, dont on fait glisser la touche sur une surface d'une pièce à mesurer.

Avec cette disposition on peut obtenir simultanément les cordonnées verticales Z (par le transducteur 28) et les cordon nées horizontales X ou Y (par le comparateur) du profil recherché. Un entraînement rigide du chariot de mesure est requis dans ce cas pour assurer un mouvement uniforme vertical du palpeur 40.

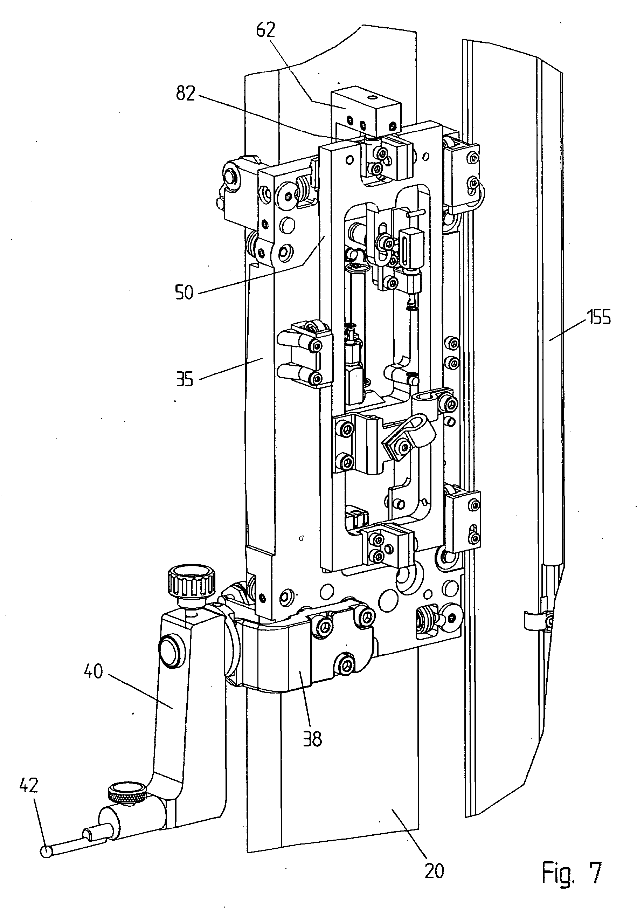

La configuration bloquée représentée sur la figure 7 permet de réaliser un entraînement rigide du palpeur 40. On utilise à cette fin l'axe cranté 82 et le dispositif d'accouplement rapide 62, placés respectivement sur le chariot de mesure 35 et sur le chariot d'entraînement 50. L'opérateur peut solidariser les deux chariotsen exerçant une force selon l'axe de mesure sur le chariot de mesure, vers le bas relativement à la disposition de la figure, poussant l'axe cranté 82 contre l'accouplement rapide 62. Cette opération peut être effectuée avec facilité, agissant simplement sur la manivelle 90, en déplaçant le chariot d'entraînement jusqu'à la limite supérieure de sa course utile, et le poussant contre la butée de fin de course (non représentée) avec une force supérieure au seuil de verrouillage prédéterminé de l'accouplement rapide 62.

Dans la configuration bloquée les forces agissant sur le chariot de mesure, en particulier les forces verticales agissantes sur le palpeur 40 sont transmisesà la structure de l'instrument de mesure 100 par les moyens d'accouplement 62 et 82, et l'élément de transmission élastique, constitué par les ressorts 70a, 70b et 72 ne participe pasà la transmission de la force. La position du palpeur 40 est donc, dans la configuration bloquée, complètement déterminée par la position des moyens d'entraînement 90 et est indépendante de la force appliquée.

Pour revenir de la configuration bloquée de la figure 7 à la configuration libre de la figure 6, l'opérateur peut déplacer le chariot de mesure à la limite opposée (inférieure) de sa course utile, et le pousser contre la butée de fin de course (non représentée) avec une force supérieure au seuil de déverrouillage des moyens d'accouplement 62 et 82.

Il est aussi à noter que le blocage et le déblocage du chariot de mesure 35 peuvent être obtenus dans n'importe quelle position du palpeur 40, en appuyant celui-ci contre la pièce à mesurer, ou contre tout autre obstacle, avec une force dépassant le seuil de verrouillage, respectivement de déverrouillage, des moyensd'accouplement 62 et 82.

Le blocage et le déblocage du chariot de mesure 35 se produisent aussi en déplaçant le palpeur 40 dans une position d'accouplement prédéterminée, correspondante en ce cas à la limite supérieure de la course du palpeur 40, ou dans une position de désaccouplement prédéterminée, correspondante à la limite inférieure de la course du palpeur 40.

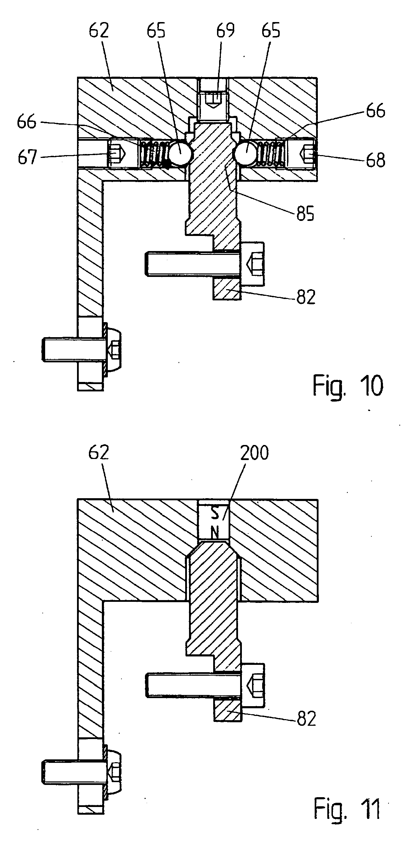

Selon une variante de l'invention, le fonctionnement des moyens d'accouplement est illustré sur la figure 10. L'axe cranté 82 présente une gorge annulaire 85, préférablement à profil triangulaire ou trapézoïdale.

L'axe 82 s'engage dans un trou correspondant de l'accouplement rapide 62, et est maintenu en place par les deux goupilles 65, poussées radialement dans la gorge 85 par les ressorts 66. L'ensemble peut se solidariser et désolidariser de manière fiable par l'action de forces axiales suffisantes à écarter les goupilles 65. Par ailleurs, l'action symétrique des goupilles 65 assure un centrage automatique de l'axe 82.

Lesvis67 et 68 permettent le réglage de la force des ressorts 66. La vis 69, d'autre part, sert au réglage de la butée de l'axe 82 et à la reprise du jeu en position bloquée. A cette fin on règle la vis 82 de manière à que les goupilles 65 appuient sur le flanc supérieur du profil de la gorge 85. Les seuils de verrouillage et de déverrouillage de l'axe 82 avec l'élément d'accouplement rapide 62 peuvent ainsi être déterminésde manière optimale. On a constaté qu'un seuil de 15 N en verrouillage et en déverrouillage assure un fonctionnement satisfaisant.

Lorsque l'axe 82 et l'accouplement rapide 62 sont écartés, ce qui correspond à la configuration libre de la figure 6, aucune force n'intervient entre les moyens d'accouplement, ainsi qu'aucune erreur de mesure n'est à craindre.

Selon une autre variante, représentée à la figure 11, les moyens d'accouplement comprennent un axe 82, réalisé en un matériau magnétisable, et un aimant permanent 200. L'accouplement a lieu en poussant l'axe 82, contre la force de rappel des ressorts 71a, 70b et 72, et modifiant la dimension des ressorts jusqu'à que l'axe ne s'approche suffisamment de l'aimant 200 pour ressentir son attraction. Le seuil de déverrouillage est déterminé par la magnétisation de l'aimant permanent 200.

Selon d'autres modesde réalisation non représentées, les moyens d'accouplement comprennent un actuateur électromagnétique, par exemple un électroaimant, actionnable par l'opérateur, ou tout autre moyen d'accouplement approprié.

Avantageusement, l'état des moyens d'accouplement peut être déterminé par le contrôleur de l'instrument de mesure, par exemple sur la base de l'indication du transducteur de position relative 300, ou par un autre dispositif de détection approprié. Le programme d'exploitation de l'instrument 100 peut ainsi indiquer, par l'affichage 181, l'état des moyens d'accouplement. Le programme peut aussi déclencher une alarme lorsque l'état d'accouplement est incompatible avec un mode mesure sélectionné, par exemple lorsqu'un sélectionne une mesure d'alésage avec le chariot bloqué.

La figure 9 montre une section de l'instrument de mesure dans laquelle on voit le boîtier 120, lequel porte une fente rectiligne 121, parallèle à l'axe de mesure, pour consentir le passage du bras 38 du palpeur 40. Une chicane 125, derrière la fente 121, limite le passage des particules de poussière et de gouttelettes d'huile et d'eau provenant de l'extérieur. La forme coudée du bras 38 épouse le profil de la chicane, de manière qu'aucun contact ne se produit entre le bras38 et le boîtier 120.

Cette forme de boîtier protège le volume interne dans lequel se trouvent les éléments de l'instrument de mesure 100 qui sont sensibles aux pollutions atmosphériques. Cependant, l'accès au chariot de mesure 35 est très difficile ou impossible, sans démonter le boîtier 120. On comprend donc l'avantage de l'invention, qui permet le blocage et le déblocage du chariot de mesure sans avoir accès au volume protégé par le boîtier 120.

La présente invention comprend aussi des dispositifs de mesure, ayant les caractéristiques revendiquées, dans lesquels l'élément de transmission élastique est réalisé autrement que par deux chariots coulissant l'un sur l'autre et reliés par des ressorts. L'homme du métier comprendra que l'élément de transmission élastique et les moyens d'accouplement relatifs pourraient assumer n'importe quelle forme et configuration appropriée, ou être logés dans d'autres éléments de l'instrument de mesure, par exemple dans la manivelle d'entraînement 90, tout en restant dans le cadre de la présente invention.

La présente invention n'est pas non plus limitée au cas d'un entraînement comprenant une courroie ou un autre organe de transmission flexible mais comprend aussi, par exemple, des instruments de mesure avec les caractéristiques revendiquées dans lesquels le palpeur est entraîné directement par un vérin ou par un moteur linéaire.

Bien que les modes de réalisation de l'invention, fournis à titre d'exemple, se réfèrent en particulier à une colonne de mesure verticale, l'invention n'est pas limitée à ce type de dispositif, mais comprend aussi tous les instruments de mesure de dimension présentant les caractéristiques revendiquées. L'homme du métier comprendra en particulier que l'invention peut s'appliquer aussi au casd'une machine pour mesurer des cordonnées tridimensionnelles, présentant un ou plus axes tels que revendiqué, ou encore à une machine-outil avec un ou plus axes ayant les caractéristiques revendiquées.

**Références**

| | |
|---|---|
| 20 | Guide |
| 22 | Règle |
| 28 | Capteur de position |
| 33 | Base |
| 35 | Chariot, chariot de mesure |
| 36 | Galetsde guidage du chariot |
| 37 | Ressort de reprise du jeu du chariot |
| 38 | Bras coudé |
| 40 | Palpeur |
| 42 | Sphère de contact |
| 50 | Pièce de transport, chariot d'entraînement |
| 52,56 | Attache de la courroie |
| 58 | Galet de guidage de la pièce de transport |
| 62 | Elément de connexion de la pièce de transport |
| 65 | Goupille |
| 66 | Ressorts |
| 67,68 | Visde réglage |
| 69 | Butée réglable |
| 70 a, b | Ressorts de rappel |
| 72 | Ressort d'équilibrage |
| 82 | Elément de connexion du chariot |
| 85 | Gorge |
| 90 | Manivelle, dispositif d'entraînement |
| 100 | Instrument de mesure de dimensions |
| 110 | Poulies |
| 120 | Enveloppe |
| 121 | Fente |
| 125 | Chicane |
| 130 | Courroie |
| 150 | Contrepoids |
| 155 | Tube de guidage du contrepoids |
| 180 | Pupitre |
| 181 | Affichage |
| 185 | Touchesde commande |
| 200 | Aimant |
| 300 | Potentiomètre, transducteur de force |

## Revendications

1. Instrument de mesure de dimensions (100) comprenant :
un chariot mobile (35) pouvant se déplacer parallèlement à un guide (20), le guide définissant un axe de mesure ;
un dispositif d'entraînement (90) relié au chariot mobile (35) par une transmission comprenant un élément élastique de transmission (70a, 70b, 72), de manière à déterminer le déplacement linéaire du chariot mobile (35);
un palpeur (40) relié au chariot mobile (35) et destiné à être mis en contact avec une pièce à mesurer ;
des moyens d'accouplement (82, 62), pouvant assumer un état libre, dans lequel les forces agissant sur le chariot mobile (35) sont transmises par l'élément élastique de transmission (70a, 70b, 72), lequel est libre de se déformer sous l'action de ces forces, et un état bloqué, dans lequel les forces agissant sur le chariot mobile (35) sont transmises par les moyens d'accouplement (82, 62), sans influencer l'élément élastique de transmission (70a, 70b, 72) ;
l'instrument de mesure (100) comprenant un boîtier de protection (120) entourant un volume protégé dans lequel se trouvent le chariot mobile (35) et le guide (20)
**caractérisé en ce que** l'état des moyens d'accouplement (82, 62) peut être modifié en appliquant au chariot mobile (35) une force supérieure à un seuil prédéterminé.

2. Instrument de mesure de dimensions (100) selon la revendication précédente, dans lequel l'état des moyens d'accouplement (82, 62) peut être modifié depuis l'extérieur, sans introduire des instruments ou des parties du corps humain à l'intérieur du volume protégé.

3. Instrument de mesure de dimensions (100) selon la revendication précédente, dans lequel l'état des moyens d'accouplement (82, 62) peut être modifié en appliquant au chariot mobile (35) une force selon l'axe de mesure supérieure à un seuil prédéterminé

4. Instrument de mesure de dimensions (100) selon la revendication 2, dans lequel l'état des moyens d'accouplement (82, 62) peut être modifié en déplaçant le palpeur (40) dans une position d'accouplement prédéterminée, ou dans une position de désaccouplement prédéterminée.

5. Instrument de mesure de dimensions (100) selon l'une des revendications précédentes, dans lequel l'état des moyens d'accouplement (82, 62) peut être modifié par un actuateur électromagnétique.

6. Instrument de mesure de dimensions (100) selon l'une des revendications précédentes, comprenant un capteur de position (28), générant un signal de position indicatif de la position du chariot mobile (35) relativement à l'axe de mesure, et un dispositif électronique de contrôle et affichage (180), pour afficher la position du palpeur (40) en fonction du signal de position.

7. Instrument de mesure de dimensions (100) selon la revendication précédente, dans lequel le capteur de position (28) est un capteur de type optoélectronique, inductif, capacitif ou magnétorésistif.

8. Instrument de mesure de dimensions (100) selon l'une des revendications précédentes, comprenant un transducteur de force (300), générant un signal de force indicatif de la force agissant sur le chariot mobile.

9. Instrument de mesure de dimensions (100) selon la revendication précédente, dans lequel le transducteur de force comprend un capteur de dimension (300) sensible à une dimension linéaire de l'élément élastique de transmission (70a, 70b, 72).

10. Instrument de mesure de dimensions (100) selon l'une des revendications précédentes, dans lequel le dispositif d'entraînement comprend un moteur électrique.

11. Instrument de mesure de dimensions (100) selon l'une des revendications précédentes, dans lequel le dispositif d'entraînement (90) est actionnable manuellement par l'opérateur.

12. Instrument de mesure de dimensions (100) selon l'une des revendications de 6 à 11, dans lequel le dispositif électronique de contrôle et affichage (180) est logé à l'intérieur d'un second boîtier étanche.

13. Instrument de mesure de dimensions (100) selon la revendication précédente, dans lequel le dispositif électronique (180) logé dans le second boîtier étanche comprend aussi des moyens d'introduction de données, par exemple des touches (185).

14. Instrument de mesure de dimensions (100) selon l'une des revendications précédentes, dans lequel les moyens d'accouplement (82, 62) comprennent une paire d'éléments de connexion, les éléments de connexion étant solidarisés dans l'état bloqué, et écartés dans l'état libre.

15. Instrument de mesure de dimensions (100) selon la revendication précédente, dans lequel l'élément élastique de transmission (70a, 70b, 72) est relié d'une part au chariot mobile (35), et d'autre part à une pièce de transport (50), la position relative du chariot mobile (35) et de la pièce de transport (50) étant variable en fonction de la force transmise par l'élément de transmission élastique (70a, 70b, 72), un des moyens d'accouplement (82) étant solidaire du chariot mobile(35), un autre moyen d'accouplement (62) étant solidaire de la pièce de transport (50), les deux moyens d'accouplement étant poussés en contact lorsque la dimension de l'élément de transmission élastique dépasse un seuil prédéterminé.

16. instrument de mesure de dimensions (100) selon la revendication précédente, dans lequel l'élément de transmission élastique comprend un ou plusieurs ressorts.

17. Instrument de mesure de dimensions (100) selon l'une des revendications de 14 à 16, dans lequel les moyens d'accouplement sont arrangés pour se solidariser lorsqu'il sont poussés l'un contre l'autre avec une force dépassant un seuil de verrouillage prédéterminé, et pour se désolidariser après solidarisation lorsqu'ils sont séparés par une force dépassant un seuil de déverrouillage prédéterminé.

18. Instrument de mesure de dimensions (100) selon la revendication précédente, dans lequel un des moyens d'accouplement comprend un axe (82) muni d'une gorge (85), et l'autre élément de connexion comprend une cavité, destinée à accueillir l'axe (82), et deux goupilles (65) disposées symétriquement par rapport à l'axe s'engageant dans la gorge (85) de ce dernier lorsque les moyens d'accouplement sont dans l'état bloqué.

19. Instrument de mesure de dimensions selon l'une des revendications de 14 à la revendication 16, dans lequel les moyens d'accouplement se solidarisent suite à une force magnétique générée par un ou plus aimants permanents (200).

20. Instrument de mesure de dimensions (100) selon l'une des revendications précédentes, comprenant un capteur (300) pour générer un signal indicatif de l'état des moyens d'accouplement.

21. Instrument de mesure de dimensions (100) selon l'une des revendications précédentes, dans lequel le boîtier de protection (120) comporte une fente longitudinale (121), parallèle à l'axe de mesure, présentant une chicane (125) pour limiter l'accès de corps étrangers à l'intérieur du volume protégé, le palpeur (40) comportant un bras de liaison coudé (38) qui épouse le profil de la chicane (125), permettant la sortie du palpeur (40) à l'extérieur du volume protégé, sans contact avec le boîtier de protection (120).

22. Instrument de mesure de dimensions (100) selon l'une des revendications précédentes comprenant un seul axe vertical de mesure, de manière à constituer une colonne de mesure verticale.

23. Instrument de mesure de dimensions (100) selon l'une des revendications de 1 à 21 comportant plusieurs axes de mesure orthogonaux.

## Claims

1. Dimension measuring instrument (100) including:
a mobile carriage (35) capable of moving parallel to a guide (20), with the guide defining a measuring axis;
a driving device (90) connected to the mobile carriage (35) by a transmission including an elastic transmission element (70a, 70b, 72), so as to determine the linear movement of the mobile carriage (35);
a probe (40) connected to the mobile carriage (35) and designed to be brought into contact with a part to be measured;
coupling means (82, 62) that can be actuated by the operator and capable of taking up an unlocked state, wherein the forces acting on the mobile carriage (35) are transmitted by the elastic transmission element (70a, 70b, 72) that is free to deform under the action of these forces, and a locked state, wherein the forces acting on the mobile carriage (35) are transmitted by the coupling elements (70a, 70b, 72) without influencing the elastic transmission element;
the measuring instrument (100) including a protective casing (120) surrounding a protected volume in which the mobile carriage (35) and the guide (20) are placed
**characterized in that** the state of said coupling means (82, 62) can be modified by applying on the mobile carriage (35) a force greater than a predetermined threshold.

2. Dimension measuring instrument (100) according to the preceding claim, wherein the state of the coupling means (82, 62) can be modified from the outside without inserting instruments or parts of the human body inside the protected volume.

3. Dimension measuring instrument (100) according to the preceding claim, wherein the state of the coupling means (62, 82) can be modified by applying to the mobile carriage (35) a force on the measuring axe greater than a predetermined threshold.

4. Dimension measuring instrument (100) according to claim 2, wherein the state of the coupling means (82, 62) can be modified by moving the probe (40) into a predetermined coupling position or into a predetermined uncoupling position.

5. Dimension measuring instrument (100) according to one of the preceding claims, wherein the state of the coupling means (82, 62) can be modified by an electro-magnetic actuator.

6. Dimension measuring instrument (100) according to one of the preceding claims, including a position sensor (28) generating a position signal indicating the position of the mobile carriage (35) relatively to the measuring axis, and an electronic control and display device (180) for displaying the position of the probe (40) according to the position signal.

7. Dimension measuring instrument (100) according to the preceding claim, wherein the position sensor (28) is a sensor of the type optoelectronic, inductive, capacitive or magneto-resistive.

8. Dimension measuring instrument (100) according to one of the preceding claims, including a force transducer (300) generating a force signal indicating the force acting on the mobile carriage.

9. Dimension measuring instrument (100) according to the preceding claim, wherein the force transducer includes a dimension sensor (300) sensitive to a linear dimension of the elastic transmission element (70a, 70b, 72).

10. Dimension measuring instrument (100) according to one of the preceding claims, wherein the driving device includes an electric motor.

11. Dimension measuring instrument (100) according to one of the preceding claims, wherein the driving device (90) can be actuated manually by the operator.

12. Dimension measuring instrument (100) according to one of the claims 6 to 11, wherein the electronic control and display device (180) is lodged inside a second tight casing.

13. Dimension measuring instrument (100) according to the preceding claim, wherein the electronic device (180) lodged in the second tight casing also includes data input means, for example keys (185).

14. Dimension measuring instrument (100) according to one of the preceding claims, wherein the coupling means (82, 62) include a pair of connecting elements, the connecting elements being fixedly united in the locked state and moved apart in the free state.

15. Dimension measuring instrument (100) according to the preceding claim, wherein the elastic transmission element (70a, 70b, 72) is connected on the one hand to the mobile carriage (35) and on the other hand to a transport part (50), the relative position of the mobile carriage (35) and of the transport part (50) being variable according to the force transmitted by the elastic transmission element (70a, 70b, 72), one of the coupling means (82) being fixedly united with the mobile carriage (35), another coupling means (62) being fixedly united with the transport part (50), both coupling means being pushed into contact when the dimension of the elastic transmission element exceeds a predetermined threshold.

16. Dimension measuring instrument (100) according to the preceding claim, wherein the elastic transmission element includes one or several springs.

17. Dimension measuring instrument (100) according to one of the claims 14 to 16, wherein the coupling means are arranged to become fixedly united when they are pushed one against the other with a force exceeding a predetermined locking threshold and to become disunited after having become united when they are separated by a force exceeding a predetermined unlocking threshold.

18. Dimension measuring instrument (100) according to the preceding claim, wherein one of the coupling means includes an axle (82) provided with a groove (85) and the other connection element includes a cavity/hollow designed to accommodate the axle (82) and two pins (65) arranged symmetrically relatively to the axle engaging into the latter's groove (85) when the coupling means are in the locked state.

19. Dimension measuring instrument (100) according to one of the claims 14 to the claim 16, wherein the coupling means become fixedly united following a magnetic force generated by one or more permanent magnets (200).

20. Dimension measuring instrument (100) according to one of the preceding claims, including a sensor (300) for generating a signal indicating the state of the coupling means.

21. Dimension measuring instrument (100) according to one of the preceding claims, wherein the protective casing (120) includes a longitudinal slit (121) parallel to the measuring axis, having a baffle (125) to limit the access of alien bodies to the protected volume, the probe (40) including a bent connection arm (38) that follows the profile of the baffle (125), allowing the probe (40) to come outside the protected volume without contact with the protective casing (120).

22. Dimension measuring instrument (100) according to one of the preceding claims, having a single vertical measuring axis so as to constitute a height gauge.

23. Dimension measuring instrument (100) according to one of the claims 1 to 21, having several orthogonal measuring axes.

## Patentansprüche

1. Dimensionsmessgerät (100) enthaltend
einen mobilen Träger (35), der fähig ist, sich parallel zu einer Führung (20) zu bewegen, wobei die Führung eine Messachse definiert,
eine Antriebsvorrichtung (90), die mit dem mobilen Träger (35) durch eine Übertragung enthaltend ein elastisches Übertragungselement (70a, 70b, 72) verbunden ist, um die lineare Bewegung des mobilen Trägers (35) zu bestimmen,
einen Tastkopf (40), der mit dem mobilen Träger (35) verbunden ist, und bestimmt ist, um mit einem zu messenden Teil in Kontakt gebracht zu werden,
Kupplungsmittel (82, 62), welche durch einen Betreiber angetrieben werden können und fähig sind, einen freien Zustand anzunehmen, wobei die Kräfte, die auf den mobilen Träger (35) wirken, durch das elastische Übertragungselement (70a, 70b, 72) übertragen werden, welcher sich unter Einwirkung dieser Kräfte frei deformieren kann, und einen verschlossenen Zustand, in welchem die Kräfte, die auf den mobilen Träger (35) wirken, durch das elastische Übertragungselement (70a, 70b, 72) übertragen werden, ohne das elastische Übertragungselement zu beeinflussen,
das Messelement (100) enthält ein Schutzgehäuse (120), welches ein geschütztes Volumen umgibt, in welches sich der mobile Träger (35) und die Führung (20) befinden,
**gekennzeichnet, dadurch dass** der Zustand von besagten Kupplungsmitteln (82, 62) durch Anwendung einer Kraft auf den mobilen Träger (35), die grösser als eine vordefinierte Schwelle ist, verändert werden kann.

2. Dimensionsmessgerät (100) gemäss dem vorhergehenden Anspruch, in welchem der Zustand der Kupplungsmittel (82, 62) von aussen verändert werden kann, ohne Instrumente oder Teile des menschlichen Körpers in dem geschützten Volumen einzusetzen.

3. Dimensionsmessgerät (100) gemäss dem vorhergehenden Anspruch, in welchem der Zustand von besagten Kupplungsmitteln (82, 62) durch Anwendung einer Kraft gemäss der Messachse auf den mobilen Träger (35), die grösser als eine vordefinierte Schwelle ist, verändert werden kann.

4. Dimensionsmessgerät (100) gemäss Anspruch 2, in welchem der Zustand der Kupplungsmittel (82, 62) durch Bewegung des Tastkopfes (40) in eine vorbestimmte Kupplungsposition oder in eine vorbestimmte Entkupplungsposition verändert werden können.

5. Dimensionsmessgerät (100) gemäss einem der vorhergehenden Ansprüche, in welchem der Zustand der Kupplungsmittel (82, 62) durch ein elektromagnetisches Stellglied verändert werden kann.

6. Dimensionsmessgerät (100) gemäss einem der vorhergehenden Ansprüche, enthaltend einen Positionssensor (28), der ein Positionssignal generiert, welches die Position des mobilen Trägers (35) relativ zu der Messachse anzeigt, und eine elektronische Kontroll- und Anzeigevorrichtung (180), um die Position des Tastkopfes (40) gemäss dem Positionssignal anzuzeigen.

7. Dimensionsmessgerät (100) gemäss dem vorhergehenden Anspruch, in welchem der Positionssensor (28) ein Sensor vom optoelektronischen, induktiven, kapazitiven oder magneto-resistenten Typ ist.

8. Dimensionsmessgerät (100) gemäss einem der vorhergehenden Ansprüche, enthaltend einen Kraftübermittler (300), der ein Kraftsignal erzeugt, welches die Kraft anzeigt, die auf den mobilen Träger wirkt.

9. Dimensionsmessgerät (100) gemäss dem vorhergehenden Anspruch, in welchem der Kraftübermittler einen Dimensionssensor (300) enthält, welcher empfindlich auf eine lineare Dimension von dem elastischen Übertragungselement (70a, 70b, 72) ist.

10. Dimensionsmessgerät (100) gemäss einem der vorhergehenden Ansprüche, in welchem das Antriebselement einen elektrischen Motor enthält.

11. Dimensionsmessgerät (100) gemäss einem der vorhergehenden Ansprüche, in welchem das Antriebselement (90) manuell durch den Betreiber angetrieben werden kann.

12. Dimensionsmessgerät (100) gemäss einem der Ansprüche 6 bis 11, in welches sich das elektronische Kontroll- und Anzeigegerät (180) in einem zweiten dichten Gehäuse befindet.

13. Dimensionsmessgerät (100) gemäss dem vorhergehenden Anspruch, in welchem das elektronische Gerät (180), welches sich in einem zweiten dichten Gehäuse befindet, auch Dateneingabemittel zum Beispiel Tasten enthält.

14. Dimensionsmessgerät (100) gemäss einem der vorhergehenden Ansprüche, in welchem die Kupplungsmittel (82, 62) ein Paar von Verbindungselementen enthält, wobei die Verbindungselemente in den geschlossenen Zustand fest miteinander verbunden sind und in dem freien Zustand getrennt sind.

15. Dimensionsmessgerät (100) gemäss dem vorhergehenden Anspruch, in welchem das elastische Übertragungselement (70a, 70b, 72) auf der einen Seite mit dem mobilen Träger (35) verbunden ist, und auf der anderen Seite mit einem Transportteil (50), wobei die relative Position des mobilen Trägers (35) und von dem Transportteil (50) variabel gemäss der Kraft, die durch das elastische Übertragungselement (70a, 70b, 72) übertragen wird, ist, wobei eins der Kupplungsmittel (82) fest mit dem mobilen Träger (35) verbunden ist, und ein anderes Kupplungsmittel (62) fest mit dem Transportteil (50) verbunden ist, wobei beide Kupplungsmittel in Kontakt gedrückt werden, wenn die Dimensionen des elastischen Übertragungselements eine vorbestimmte Schwelle überschreitet.

16. Dimensionsmessgerät (100) gemäss dem vorhergehenden Anspruch, in welchem das elastische Übertragungselement eine oder mehrere Federn enthält.

17. Dimensionsmessgerät (100) gemäss einem der Ansprüche 14 bis 16, in welchem die Kupplungsmittel angeordnet sind, um fest verbunden zu werden, wenn sie mit einer Kraft, die eine vorbestimmte Verschlussschwelle überschreitet, gegeneinander gedrückt werden und durch eine Kraft, die eine vorbestimmte Schwelle zum Lösen überschreitet, getrennt werden.

18. Dimensionsmessgerät (100) gemäss dem vorhergehenden Anspruch, in welchem eine der Kupplungsmittel ein Achse (82) einhält, die sich in einer Nut (85) befindet, und das andere Verbindungsmittel einen Hohlraum enthält, der bestimmt ist, die Achse (82) und zwei Stifte (65) aufzunehmen, die symmetrisch relativ zu der Achse in die Nut (85) des Letzteren eingreifen, wenn die Kupplungsmittel in verschlossenen Zustand sind.

19. Dimensionsmessgerät (100) gemäss einem der Ansprüche 14 bis Anspruch 16, in welchem die Kupplungsmittel fest verbunden werden, die einer magnetischen Kraft durch einen oder mehrere Permanentmagnete (200) folgen.

20. Dimensionsmessgerät (100) gemäss einem der vorhergehenden Ansprüche, enthaltend einen Sensor (300), um ein Signal zu erzeugen, das den Zustand der Kupplungsmittel anzeigt.

21. Dimensionsmessgerät (100) gemäss einem der vorhergehenden Ansprüche, in welchem das Schutzgehäuse (120) einen länglichen Schlitz (121) parallel zur der Messachse enthält, mit einem Schutz (125), um den Zugang von Fremdkörpern zu dem Schutzvolumen zu begrenzen, der Tastkopf enthält einen gebogenen Verbindungsarm (38), welchem dem Profil des Schutzes (125) folgt, was es dem Tastkopf erlaubt, ausserhalb des Schutzvolumens ohne Kontakt mit dem Schutzgehäuse (120) zu kommen.

22. Dimensionsmessgerät (100) gemäss einem der vorhergehenden Ansprüche, mit einer vertikalen Achse, um eine Höhenmesseinrichtung einzurichten.

23. Dimensionsmessgerät (100) gemäss einem der Ansprüche 1 bis 21, mit mehreren orthogonalen Achsen.
